# EUROPEAN PATENT APPLICATION

(11) **EP 3 961 524 A1**
(43) Date of publication of application: **02.03.2022**
(21) Application number: 20193460.1
(22) Date of filing: 28.08.2020
(51) Int. Cl.: G06Q 10/04, G05B 23/02, G06Q 10/00

(54) **METHOD AND SYSTEM FOR PREDICTING A PRODUCTION LINE STANDSTILL TIME FOR AN INDUSTRIAL AUTOMATION ARRANGEMENT**

(71) Applicant: Siemens Aktiengesellschaft, 80333 München (DE)
(72) Inventor: Lavrik, Vladimir, 63303 Dreieich (DE); Gross, Ralf, 90471 Nürnberg (DE); Klos, Hans-Henning, 91249 Weigendorf (DE); Kohler, Benjamin, 90408 Nürnberg (DE); Riedl, Wolfgang, 90408 Nürnberg (DE); Schnittger, Jens, 91475 Lonnerstadt (DE)

(57) **Abstract**

The invention discloses a method and a system for providing a predicted time interval before the standstill of a production line. This task is solved by using a machine learning approach. The approach consists of several steps. In a first step, information on states or change of states of aggregates (Agg.1, ..., Agg.N) of a production line is continuously collected. In a second step, the information on the aggregate (RC Agg.) which is the root cause for a bottleneck aggregate (BN Agg.) standstill is determined and the information on the time interval from the start of the root cause aggregate (RC Agg.) fault to the bottleneck aggregate (BN Agg.) standstill is obtained. In a third step, a dataset for the machine learning algorithm is prepared from this information. In a fourth step, the chosen machine learning algorithm is trained with the prepared datasets. Finally, in a fifth step the time to a bottleneck aggregate (BN Agg.) standstill with a trained machine learning algorithm utilizing newly collected data from the first step with a preprocessing described in the third step is predicted.

## Description

The invention relates to a method for predicting a production line standstill time for an industrial automation arrangement according to the preamble of patent claim 1, and to a system for predicting a production line standstill time for an industrial automation arrangement according to the preamble of patent claim 8.

During a long-term operation of any production line in an industrial environment, hardware or/and software faults are almost unavoidable. Even one such fault can cause a cascade of other faults across aggregates (machines, devices, stations) in a production line, which ends up with a standstill state of a whole production line. A lot of production lines have a bottleneck aggregate (short: BN aggregate; BN Agg.; bottleneck), which determines the throughput of the whole line. If this aggregate is in the standstill state, the production line can be treated as inoperative, with a corresponding strong impact on operational cost and profit. It is desirable to be able to predict a possible standstill of a bottleneck aggregate. Our solution is supposed to provide a predicted time interval before the standstill of a bottleneck may occur.

There are several approaches how to predict the time to the bottleneck standstill:
1. With deep domain expert knowledge and a lot of experience, one might be able to analyze the time diagram manually based on states of aggregates and roughly predict a time to standstill of bottleneck aggregate. Obviously, this is not feasible in practice, since an expert would have to analyze a steady stream of aggregate state messages all the time. It must be kept in mind that in real life operation, aggregate disturbances are frequent, but most of them are transient and will not cause the line to stop.
2. Another method is to employ a rule-based algorithm which calculates this time based on the usage of known system (aggregates, transport lines) parameters. Such an approach is, inter alia, disclosed in the European Patent Application with the application file number EP 192 143 78.2 - Gross et al.: "Verfahren zur Vorhersage eines Stillstands, Frühwarneinrichtung, Produktionsanlage und Computerprogrammprodukt".

This approach has the advantage of producing predictions that are never too optimistic, and also can provide a latest time of successful operator intervention, so that fixing the problem before that time will guarantee prevention of the occurrence of a bottleneck standstill. The disadvantage of the approach is that - due to its rule-based nature - it is "maximally pessimistic", because it is designed to produce predictions that will never fall below the true time to bottleneck standstill. However, like other known methods in the field of root cause analysis, this approach is able to identify the aggregate or component ("root cause aggregate") in a production line which is responsible for a standstill of the bottleneck aggregate.

In most cases in reality, the true time to bottleneck standstill will be longer, thus also leaving more time until operator intervention must occur to prevent the standstill. Therefore, it is a valuable complement to get, in addition to a safe lower bound for the prediction, also something like a most probable estimate that generally will be substantially higher.

Therefore, it is a task for the current invention to provide a predicted time interval before the standstill of a bottleneck may occur.

The task is solved by using a machine learning approach. The approach consists of several steps. In a first step, information on states or change of states of aggregates of a production line is continuously collected. In a second step, the information on the aggregate which is the root cause for a bottleneck aggregate standstill is determined and the information on the time interval from the start of the root cause aggregate fault to the bottleneck aggregate standstill is obtained. In a third step, a dataset for the machine learning algorithm is prepared from this information. In a fourth step, the chosen machine learning algorithm is trained with the prepared datasets. Finally, in a fifth step the time to a bottleneck standstill with a trained machine learning algorithm utilizing newly collected data from step 1 with a preprocessing described in step 3 is predicted.

In particular, the task is solved by the subject-matter of the independent patent claims.

The solution proposes a method for predicting a production line standstill time for an industrial automation arrangement, the production line comprising a number of coupled aggregates, one of the aggregates being a bottleneck aggregate, the bottleneck aggregate determining the throughput of the production line, one of the aggregates being the root cause aggregate responsible for the production line standstill, and each aggregate having one state of a set of possible statuses at each time. The solution proposes first identifying and storing, in first steps, of each state change of each of the aggregates in a database. This data is used for training a machine learning algorithm, the training comprising in second steps, in case of a standstill of the bottleneck aggregate, identifying a root cause aggregate responsible for the bottleneck aggregate standstill and obtaining the time interval between the root cause aggregate entering an internal failure state und the bottleneck aggregate switching into a standstill, in third steps, preparing, from the information gathered in the second steps and from the state information in the time interval of all aggregates, datasets, and, in fourth steps, training the machine learning algorithm with the datasets. Finally, the method proposes using, in fifth steps, the trained machine learning algorithm for predicting time to a next standstill of the bottleneck aggregate, wherein newly collected current data analog to the first steps is used as input information to the trained machine learning algorithm and the output of the trained machine learning algorithm is presented as the predicted time. With this method, a realistic standstill time of the bottleneck aggregate and thus the production line can be estimated.

The solution also proposes a System for predicting a production line standstill time for an industrial automation arrangement, the production line comprising a number of coupled aggregates, one of the aggregates being a bottleneck aggregate, the bottleneck aggregate determining the throughput of the production line, one of the aggregates being the root cause aggregate responsible for the production line standstill, and each aggregate having one state of a set of possible statuses. The system further comprises a monitoring unit, the monitoring unit being setup for identifying and storing, in first steps, of each state change of each of the aggregates in a database, the system being setup for training a machine learning algorithm with state data of the aggregates, the training comprising, in second steps, in case of a standstill of the bottleneck aggregate, identifying a root cause aggregate responsible for the bottleneck aggregate standstill and obtaining the time interval between the root cause aggregate entering an internal failure state und the bottleneck aggregate switching into a standstill, in third steps, preparing, from the information gathered in the second steps and from the state information in the time interval of all aggregates, datasets, and, in fourth steps, training the machine learning algorithm with the datasets. The system is further setup for using, in fifth steps, the trained machine learning algorithm for predicting time to a next standstill of the bottleneck aggregate, wherein newly collected current data analog to the first steps is used as input information to the trained machine learning algorithm and the output of the trained machine learning algorithm is presented as the predicted time. With such a system, the same advantages as already discussed in connection with the method can be achieved.

The solution is also given by a computer program product which, if executed on a computer hardware, executes the inventive method.

Advantageous embodiments of the invention are given by the dependent patent claims. The features of these can be realized one by one or in a senseful combination.

Advantageously, in the third steps the state information of all aggregates comprises absolute or relative cumulated time each of the aggregates spent in which of the different statuses in the time interval. The format (absolute or relative) has to be in line with the format used later in the fifth steps.

The accuracy of prediction will be improved if, in the third step, cumulated historic state information of the aggregates from the time before the time interval is added to the dataset, and accordingly in the fifth step cumulated historic state information of the aggregates from the time before the time interval is added to the input information.

Cumulated state information can be absolute or relative cumulated time each of the aggregates spent in the several possible statuses.

In an embodiment, in the third step cumulated historic state information of the aggregates from the time before the time interval is added to the dataset. In an advantageous variant thereof, older aggregate state information of is less weighted in the cumulated historic state information. This improves prediction accuracy.

Preferably, the possible statuses include at least one of Normal Operation, Internal Fault, Tailback, or Starvation. Of course, other categories are possible as well. Important is the general distinction between internal faults (e.g. hardware defects) and externally induced errors, like standstill of the root cause aggregate resulting from Starvation or Tailback. The training steps, in particular the second, third and fourth steps, are conducted if and when the bottleneck aggregate switches into the standstill due to Starvation or Tailback - or in general: externally induced fault - and if one of the aggregates is identifiable as root cause aggregate for this.

An example of the inventive method is discussed is disclosed with the drawings. Therein,
- Figure 1: shows four tables with information used for training of the machine learning algorithm,
- Figure 2: shows the calculation of cumulated state information of one aggregate between two points in time,
- Figure 3: illustrates the definition of a standstill time between the fault of a root cause aggregate and the standstill of the bottleneck aggregate, and
- Figure 4: shows two cycles which are used for training of the machine learning algorithm.

First, the first step "Dataset collection" of the inventive method shall be illustrated.

One of the simplest and most straightforward ways to describe a state of an aggregate in a production line is to introduce discrete indicators. In our approach, every aggregate at a production line at a certain time can be described by one out of four indicators:
1: Normal operation
2: Internal fault
3: Tailback
4: Starvation

In a normal operation state, the aggregate performs as expected.

If the aggregate has an internal fault, it is stopped due to errors in hardware setup or software setup or a mechanical problem that needs intervention. In this case the aggregate is inoperative, which can lead to a cascade of state changes of other aggregates.

The tailback state means that the output buffer of the aggregate is full and it must stop because it can no longer output material.

The starvation state of an aggregate means that the input buffer of the aggregate is empty so that it will stop due to a lack of provided input material.

The standstill types relevant for the bottleneck aggregate are only starvation and tailback, because internal faults are not due to material transport problems caused by other aggregates and therefore are not predictable by material flow analysis.

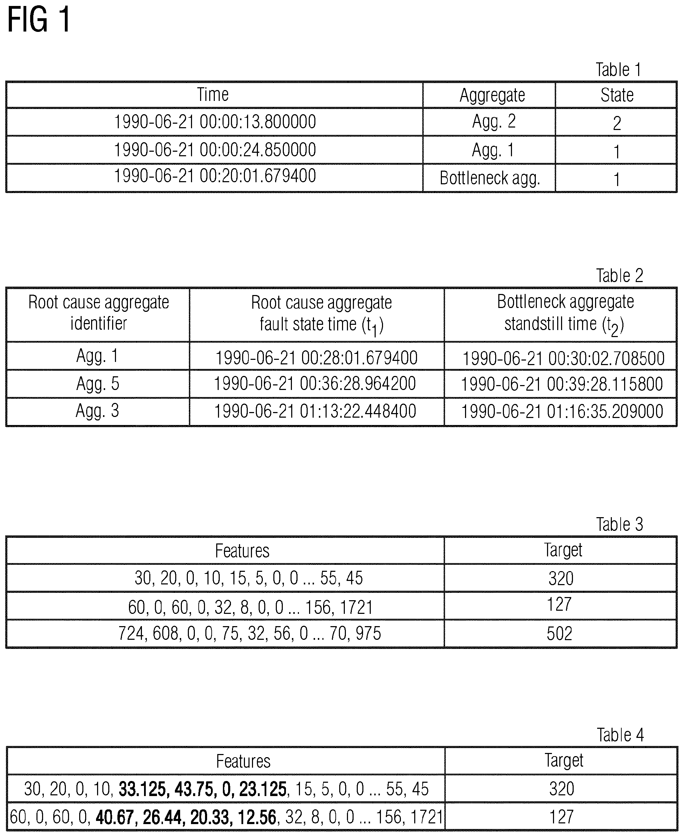

Figure 1 shows four tables Table 1, ..., Table 4 with state information. A typical example of how the basic dataset may look like is shown in Table 1 of Figure 1.

Every row in this table Table 1 represents a time, the aggregate identifier Agg. 1, Agg. 2, BN Agg., and a state of the aggregate at this time. In fact, only state changes matter, so the times always correspond to the time of change to the new state.

The table is populated in such a way that every time when any of aggregates changes its state, a new row will be added at the end of the table and will contain the information about the time when the state of the aggregate was changed, the identifier of the aggregate and the state to which the aggregate changed. Thereby, the table Table 1 forms a database which contains a full history about all the states of the aggregates during the observation time. The table Table 1 is an example for the database for storing of the state changes. Of course, any other suitable storage structure or memory area or file system (e.g. CSV file) can serve as the database.

The second step "Collection of the information on root cause aggregates" of the inventive method considers one of the N aggregates Agg. 1, ..., Agg. N - other than the "bottleneck aggregate" - which is called a "root cause aggregate" (RC aggregate; RC Agg.), if there is a causation between this aggregate's RC Agg. internal fault (state 2) and the bottleneck aggregate's BN Agg. standstill (either state 3 or 4). The time between these two events - the time to standstill - is denoted by T or (in the tables Table 1, ..., Table 4) as "Target". Knowing this time allows to predict a date/time of a future standstill of a bottleneck aggregate BN Agg., but for training of the machine learning algorithm the times T (or "Target") are calculated from the database entries, in particular from the database entries of the root cause aggregate (switching into an internal fault mode) and of the bottleneck aggregate (switching into an externally induced error mode, in particular caused by Starvation or Tailback).

There are different approaches to extracting the information on root cause aggregate standstills. The simple approach would be to collect data manually and calculate the statistics on T. The more sophisticated way is to use a rule-based analysis algorithm developed in the state of the art of root cause analysis, based on automatically collected data. Typically, it is well known which of the aggregates Agg. 1, ..., Agg. N is the Bottleneck aggregate BN Agg. It is the aggregate which determines the throughput of the whole production line. A standstill of the Bottleneck aggregate is equal to the standstill of the production line - and vice versa. For example, in a production of beverages the bottle filling station is the Bottleneck aggregate.

This algorithm takes as input the information collected at step 1 and creates a report which can be summarized in the form shown in Table 2 of Figure 1.

Table 2 shows the summary from the analysis of a possible root cause for the bottleneck standstill at a production line. The first row indicates that the aggregate Agg. 1 is responsible ("Root Cause aggregate") for the later Bottleneck aggregate standstill when it goes into the fault state at time t1. At time t2, the Bottleneck aggregate goes into a standstill state. The time T = (t2 - t1) is the time to standstill as defined above. It is assumed that the root cause analysis according to a known algorithm provides a unique result; ambiguous cases are simply disregarded for training the machine learning model as described below. In spite to the Bottleneck aggregate which typically is well known, any other aggregate might be the root cause aggregate RC Agg. and, moreover, case by case the role of the root cause aggregate might switch from one aggregate to another. If a production line has several branches with parallel routes, the root cause aggregate RC Agg. might be a combination of multiple single aggregates or devices.

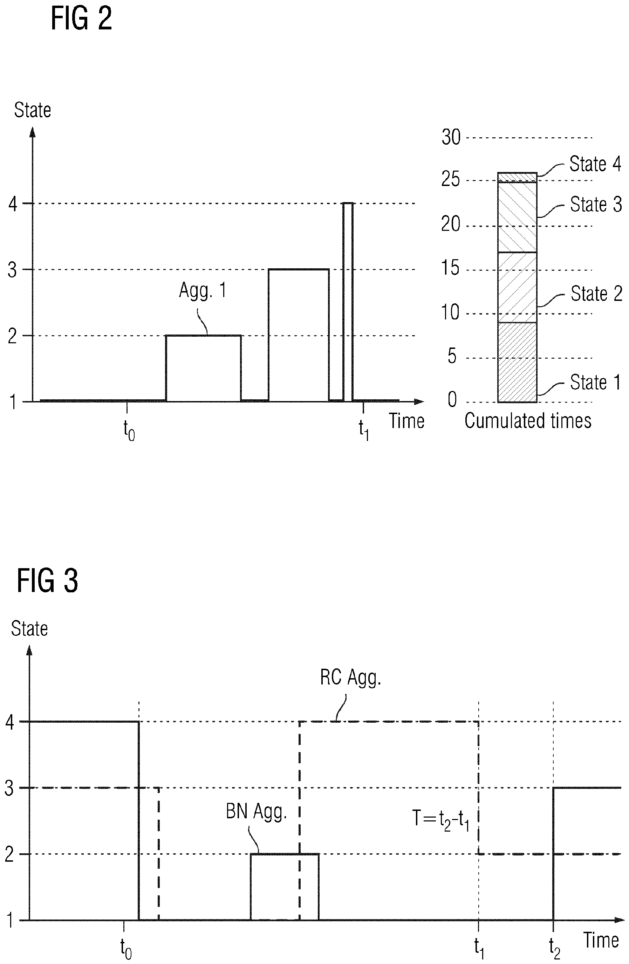

In a third step "Prepare features for a machine learning model" an approach to feature generation for a machine learning algorithm is given. That means, datasets for training of the machine learning algorithm are created from the information gathered before. As a basis for feature generation or dataset generation we take the cumulated times the aggregate was/is in a certain state between two time points. This is illustrated in Figure 2.

The aim is to collect statistics on the times the aggregates spent in a certain state. Graphically this corresponds to the sum of the intervals on the horizontal axis corresponding to a certain state, as shown in Figure 1. For the example shown in Figure 2, for the aggregate Agg. 1 we can calculate the cumulated times in every state between points t0 and t1. For the sake of simplicity we consider a time interval between t0 and t1 as equal to 26 s. Cumulated times can be represented then as a vector, e.g.: 9, 8, 8, 1. The vector in this example means: Between times t0 and t1 the aggregate Agg. 1 was in state 1 for 9s; in state 2 for 8s, in state 3 for 8s, and in state 4 for Is. It is illustrated by the stacked bar chart on the right-hand side of Figure 1. The same statistics can be obtained for all aggregates in a production line (not shown). If we have N aggregates, then between time t0 and t1 we have 4*N statistics which represent the cumulated times Agg. i was in a certain state. Combining the information from tables Table 1 and Table 2 we can obtain the statistics for the time periods between time t0 where the Bottleneck aggregate (BN Agg.) switched to a normal operation and time t1 when RC aggregate switched to internal fault state. The corresponding drawing is shown in Figure 3 which explains the populating of a machine learning matrix. Cumulated times aggregates spent in a certain time computed between times t0 and t1. The time interval T indicates the time to a Bottleneck aggregate standstill.

In our approach we slice the entire dataset into cycles which are defined as follows: time t0 represents the moment in time when a bottleneck aggregate (BN Agg.) is switched from a standstill state to normal operation. Time t1 is taken from Table 2 and represents the time when a root cause aggregate root cause aggregate RC Agg. goes into internal fault state causing a following bottleneck standstill. The cycle ends with a time t2 when the bottleneck aggregate goes to a standstill state (either state 3 or 4) which is not caused by an internal error / fault of the bottleneck aggregate itself. Using conventional Root Cause Analysis (RCA), one can always identify the cause of the bottleneck standstill - the root cause aggregate - which started the chain of causation by going into the internal fault state.

The next cycle starts when the bottleneck aggregate starts again to operate in the normal state. This point in time is chosen in order to start every cycle for data collection from a defined situation, where the dynamic constellation around the bottleneck (i.e. the buffer filling levels) is comparable between the different cycles.

Figure 3 shows the typical cycle between the time t0 when the bottleneck aggregate (solid line) is in the normal operation state and the time t2 when the bottleneck aggregate BN Agg. goes to a standstill state. The root cause aggregate RC Agg. (dashed line) at the beginning of the cycle is in state 3 and then at time t1 switches into state 2, which later leads to the standstill state of a bottleneck aggregate. According to Table 1, the first cycle of our dataset starts at the time when the bottleneck aggregate BN Agg. goes into state 1 (3rd line of Table 1); according to Table 2 the root cause aggregate RC Agg. is Agg. 1 and the root cause aggregate fault time is t1; the bottleneck aggregate standstill time is t2. The time to standstill is defined as T = t2 - t1. In machine learning terminology, this is usually called the Target, or more precisely, the target for prediction. For the time period between t0 and t1 we calculate statistics on the cumulated times aggregates were in a certain state, and for these statistics the corresponding target T is t2 - t1.

| | |
|---|---|
| • Agg 1: | [30, 20, 0, 10] |
| • Bottleneck Agg. (BN Agg.): | [15, 5, 0, 0] |

The same statistics are calculated for the remaining N - 2 aggregates.

Stacking these vectors vertically, one obtains a resulting vector of length N*4, which corresponds to the time to standstill T for the cycle illustrated in Figure 3.

The same procedure is repeated for all cases where the root cause aggregate is known.

This results in a matrix as shown in Table 3 (see Figure 1).

The feature matrix has a dimension M x N * 4, where M is the number of bottleneck standstill states in the dataset (and thus being the number of rows in Table 3), and N is the number of aggregates that can be used for training any machine learning algorithm in a supervised setting.

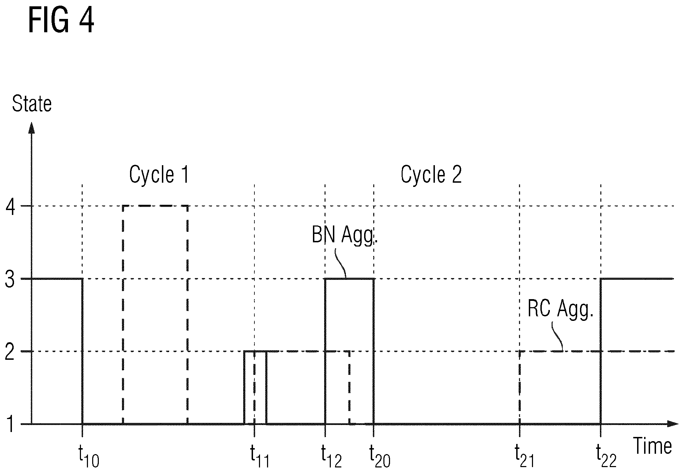

The feature matrix as generated above, however, has one big disadvantage: for every new cycle (row in a feature matrix) it considers only the cumulated times within the cycle and does not take into account the states of the aggregates within previous cycles and during the "inter-cycle" gaps when the bottleneck is in a starvation/tailback state. The cumulated times are computed for every cycle only between times tn0 and tn1, where n is the number of cycles. In order to address this problem, we introduce additional 4 values for every aggregate which are supposed to keep historical information on previous states of the aggregate starting from the moment of data acquisition up to the end of the current cycle. This is illustrated by Figure 4.

Here, for simplicity of explanation, we consider two cycles: the first cycle Cycle 1 starts at t10 and ends at t11 and the second cycle Cycle 2 starts at t20 and ends at t21. The target for the first cycle is T1 = t12 - t11, the target for the second cycle is T2 = t22 - t21. In this case we consider two rows of a machine learning matrix. We assume that we have a full history of aggregate states up to the beginning of cycle 1 at time t10. Assuming that the time before t10 for aggregate Agg. 1 is 100 s, one can obtain the following statistics about the time Agg. 1 cumulatively spent in certain states up to time t10:
- State 1: 23 s
- State 2: 50 s
- State 3: 0 s
- State 4: 27 s

Starting from time t10 we have information on the cumulated times of Agg. 1 for cycle Cycle 1. If the duration of cycle Cycle 1 is 60 seconds, and within these 60 seconds, Agg. 1 was cumulatively 30 seconds in state 1, 20 seconds in state 2, 10 seconds in state 4 and 0 seconds in state 3, one can obtain the following statistics considering the information on cumulated times before time t10. These statistics are supposed to represent the percentage Agg 1 was in a certain state:
- State 1: (23 + 30) / (100 + 60) =0.33125 = 33.125%
- State 2: (50 + 20) / (100 + 60) = 0.4375 = 43.75%
- State 3: (0 + 0) / (100 + 60) = 0 = 0%
- State 4: (27 + 10) / (100 + 60) =0.23125 = 23.125%

Next, we update information on cumulated aggregate times for the time period between cycles Cycle 1, Cycle 2 (information between t11 and t20) which has a duration of 15 seconds. We combine it with information on cumulated times for states for cycle Cycle 1 so we can populate the second row of a machine learning matrix assuming that duration of cycle 2 is 120 s, and Agg. 1 within cycle 2 was cumulatively 60 seconds in state 1, 60 seconds in state 3, and 0 seconds in state 2 and 4. We obtain:
- State 1: (23 + 30 + 7 + 60) / (100 + 60 + 15 + 120) = 0.4067 = 40.67%
- State 2: (50 + 20 + 8 + 0) / (100 + 60 + 15 +120) = 0.2644 = 26.44%
- State 3: (0 + 0 + 0 + 60) / (100 + 60 + 15+120) = 0.2033 = 20.33%
- State 4: (27 + 10 + 0 + 0) / (100 + 60 + 15 +120) = 0.1254 = 12.56%

We apply the same calculation for the remaining N - 1 aggregates. In order to illustrate how the machine learning matrix for Agg. 1 for the first two cycles looks like, we extend table 3 to table 4 (see Figure 1).

The first 4 values in the first row correspond to cumulated times Agg. 1 spent in a certain state, the next 4 values (in bold) keep the historical track on states Agg. 1 spent since the starting of data acquisition. Of course, the above procedure does not yet consider the fact that information on aggregate states far in the past is less relevant to the current bottleneck standstill than information from the near past. However, this can easily be taken into account by a "discount factor" *λ* ∈ (0,1) - a hyperparameter of the learning procedure - that will suppress the contribution from a cycle that is k cycles away from the one currently considered by a factor of *λ k*. The generalization of the example shown above is obvious. The final machine learning feature matrix will have a dimension M x N*(4+4) where M is the number of bottleneck standstill states in the dataset and N is the number of aggregates.

Very old entries of the database (see table Table 1) which already have been used for training of the machine learning algorithm and which have been processed to a cumulated and "weighted" (see the "discount factor") historic set of state information would be "discounted" with a factor A close to 0 and thus can be deleted without losing much accuracy. This reduces and limits the memory space needed for the database. After that, a fourth step "Training a machine learning algorithm" is conducted. Machine learning is a dynamically developing area of artificial intelligence. Therefore, we do not propose one particular machine learning algorithm, and it is not necessary to do so, because the presented method will fit to any machine learning algorithm for regression in a supervised setting. As soon as a machine learning training has been carried out, one can perform the prediction of times to standstill. Whenever a cycle Cycle 1, Cycle 2 is completed and a known method of root cause analysis can identify the responsible aggregate (root cause aggregate) for the bottleneck aggregate standstill, a new line (or "vector") according to the method which lead to the lines of Table 4 will be created and used for training (improving) the machine learning algorithm.

Finally, in a fifth step "Predict time to bottleneck standstill" the machine learning algorithm is permanently confronted with state information (or information on state changes) of the aggregates. Whenever one of the aggregates enters an internal fault mode the machine learning algorithm responds with a predicted standstill time (or better: time to standstill) of the bottleneck aggregate.

At this step one must collect the information on aggregate states of the production line and transform it according to the steps described above. In order to predict the time to bottleneck standstill and resolve the problem addressed in this invention, we can feed the feature matrix into the trained model every time one of the aggregates goes to the internal fault state, assuming that it leads to a bottleneck standstill. As was mentioned above the rule-based solution from the prior art is never too optimistic, but will typically give a somewhat pessimistic estimate, while the current proposal promises to get closer to the typical true values, but without a guarantee. Therefore, combining these two solutions might produce additional benefit for the prediction of bottleneck standstills.

The trained machine learning algorithm is valid for the production line producing one specific product. If the production line is re-configured for producing a different product with different setpoints, paths, time-constants etc., the training has to be repeated. Therefore, in an embodiment it is possible to save, on a storage medium, the properties or parameters ("configuration") of the trained machine learning algorithm (e.g. a Neural Network configuration) so that one can have a repository of configurations for different products.

The main advantage of the invention as compared to the existing approach is that the predicted times will typically be closer to reality, even though the predictions are less safe. For cost efficient intervention planning it is important to have a realistic picture of the true time to bottleneck standstill. The practical usefulness of such an Early Warning feature, which should be one of the main features of future Root Cause Analysis products, is enhanced. The proposed method and system integrate sophisticated machine learning with domain specific feature generation based on the results of a rule-based analysis.

## Claims

1. Method for predicting a production line standstill time for an industrial automation arrangement,
the production line comprising a number of coupled aggregates (Agg. 1,..., Agg.N),
one of the aggregates being a bottleneck aggregate (BN Agg.), the bottleneck aggregate (BN Agg.) determining the throughput of the production line,
one of the aggregates (Agg. 1,..., Agg.N) being the root cause aggregate (RC Agg.) responsible for the production line standstill,
each aggregate (Agg. 1,..., Agg.N) having one state of a set of possible statuses,
**characterized in**,
training a machine learning algorithm with state data of the aggregates (Agg. 1,..., Agg.N), the training comprising:
- in first steps, identifying and storing of each state change of each of the aggregates (Agg. 1,..., Agg.N) in a database,
- in second steps, in case of a standstill of the bottleneck aggregate (BN Agg.), identifying the aggregate (Agg. 1,..., Agg.N) being the root cause aggregate (RC Agg.) responsible for that bottleneck aggregate (BN Agg.) standstill and obtaining the time interval between the root cause aggregate (RC Agg.) entering an internal failure state und the bottleneck aggregate (BN Agg.) switching into a standstill,
- in third steps, preparing, from the information gathered in the second steps and from the state information of all aggregates (Agg. 1,..., Agg.N) in the time interval, datasets, and
- in fourth steps, training the machine learning algorithm with the datasets, and
using the trained machine learning algorithm for predicting time to a next standstill of the bottleneck aggregate (BN Agg.), comprising:
- registering, in fifth steps, a state change of one of the aggregates (Agg. 1,..., Agg.N) to an internal failure, collecting current state information on the aggregates (Agg. 1,..., Agg.N) and using the current state information as input information to the trained machine learning algorithm,
- obtaining, from the machine learning algorithm, an output, and
- presenting or using the output of the trained machine learning algorithm as the predicted time.

2. The method according to claim 1,
**characterized in,**
**that** in the third steps the state information of all aggregates (Agg. 1,..., Agg.N) comprises absolute or relative cumulated time each of the aggregates (Agg. 1,..., Agg.N) spent in which of the different possible statuses in the time interval.

3. The method according to claim 1 or 2,
**characterized in,**
**that**, in the third step, cumulated historic state information of the aggregates (Agg. 1,..., Agg.N) from the time before the time interval is added to the dataset, and
**that** in the fifth step cumulated state information of the aggregates (Agg.1,..., Agg.N) from the time before the registered state change is added to the input information.

4. The method according to claim 3,
**characterized in,**
**that** the cumulated state information and the cumulated historic state information comprises the absolute or relative cumulated time each of the aggregates (Agg.1,..., Agg.N) spent in which of the different statuses in the time before the state change or the time before the time interval.

5. The method according to one of claims 3 or 4,
**characterized in,**
**that** older aggregate state information is less weighted than younger aggregate state information in the cumulated historic state information or cumulated time information.

6. The method according to one of the preceding claims, **characterized in,**
**that** the possible statuses include at least one of Normal Operation, Internal Fault, Tailback, or Starvation.

7. The method according one of the preceding claims,
**characterized in,**
**that** the second, third and fourth steps are conducted if and when the bottleneck aggregate (BN Agg.) switches into the standstill due to Starvation or Tailback and if one of the aggregates (Agg.1,..., Agg.N) is identifiable and identified as being the root cause aggregate (RC Agg.) for that standstill.

8. System for predicting a production line standstill time for an industrial automation arrangement,
the production line comprising a number of coupled aggregates (Agg.1,..., Agg.N),
one of the aggregates (Agg.1,..., Agg.N) being a bottleneck aggregate (BN Agg.), the bottleneck aggregate (BN Agg.) determining the throughput of the production line,
one of the aggregates (Agg.1,..., Agg.N) being the root cause aggregate (RC Agg.) responsible for the production line standstill,
each aggregate (Agg.1,..., Agg.N) having one state of a set of possible statuses,
**characterized in,**
**that** the system comprises a monitoring unit,
the monitoring unit being setup for identifying and storing, in first steps, of each state change of each of the aggregates (Agg.1,..., Agg.N) in a database,
**that** the system is setup for training a machine learning algorithm with state data of the aggregates (Agg.1,..., Agg.N), the training comprising training a machine learning algorithm with state data of the aggregates (Agg.1,..., Agg.N), the training comprising:
- in first steps, identifying and storing of each state change of each of the aggregates (Agg.1,..., Agg.N) in a database,
Agg.N- in second steps, in case of a standstill of the bottleneck aggregate (BN Agg.), identifying the aggregate (Agg.1,..., Agg.N) being the root cause aggregate (RC Agg.) responsible for that bottleneck aggregate (BN Agg.) standstill and obtaining the time interval between the root cause aggregate (RC Agg.) entering an internal failure state und the bottleneck aggregate (BN Agg.) switching into a standstill,
- in third steps, preparing, from the information gathered in the second steps and from the state information of all aggregates (Agg.1,..., Agg.N) in the time interval, datasets, and
- in fourth steps, training the machine learning algorithm with the datasets, and
**that** the system is set up for using the trained machine learning algorithm for predicting time to a next standstill of the bottleneck aggregate (BN Agg.), comprising:
registering, in fifth steps, a state change of one of the aggregates to an internal failure, collecting current state information on the aggregates and using the current state information as input information to the trained machine learning algorithm,
obtaining, from the machine learning algorithm, an output, and
presenting or using the output of the trained machine learning algorithm as the predicted time.

9. Computer program product for execution on a computer hardware,
**characterized in,**
**that** the Computer program is set up for conducting the method of claim 1.
